(19) Europäisches Patentamt
European Patent Office
Office européen des brevets

(11) **EP 3 970 956 B1**

(12) **EUROPEAN PATENT SPECIFICATION**

(45) Date of publication and mention
of the grant of the patent:
**28.02.2024 Bulletin 2024/09**

(21) Application number: **20382832.2**

(22) Date of filing: **21.09.2020**

(51) International Patent Classification (IPC):
**B29C 70/48** (2006.01)      **B29C 70/44** (2006.01)
**B29C 70/54** (2006.01)      **G05B 11/42** (2006.01)
**G05B 13/04** (2006.01)      **B29C 45/76** (2006.01)
**B29C 45/04** (2006.01)      B29C 45/26 (2006.01)

(52) Cooperative Patent Classification (CPC):
**B29C 45/7693; B29C 70/48; B29C 70/546;**
**G05D 7/0676;** B29C 31/041; B29C 2045/2683;
B29C 2045/2687; B29C 2045/2691;
B29C 2945/76545; B29C 2945/76859;
G05B 2219/45244

(54) **METHOD OF CONTROLLING A RESIN INFUSION PROCESS**

VERFAHREN ZUR STEUERUNG EINES HARZINFUSIONSPROZESSES

PROCÉDÉ DE COMMANDE D'UN PROCESSUS D'INFUSION DE RÉSINE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.03.2022 Bulletin 2022/12**

(73) Proprietor: **Airbus Defence and Space, S.A.U.
28906 Getafe - Madrid (ES)**

(72) Inventors:
• **BUELGA SÁNCHEZ, Rubén
11500 El Puerto de Santa María (ES)**
• **DURTH, Mélanie
41300 La Rinconada (ES)**
• **FERNÁNDEZ VALDERAS, Rosario
41300 La Rinconada (ES)**
• **GONZÁLEZ LÓPEZ, Sergio
41300 La Rinconada (ES)**
• **LASAGNI, Fernando
41300 La Rinconada (ES)**

• **GUERRERO HENRY, Javier
28906 Getafe (ES)**
• **RUBIO GARCÍA, Luis
28906 Getafe (ES)**

(74) Representative: **Elzaburu S.L.P.
Edificio Torre de Cristal
Paseo de la Castellana 259 C, planta 28
28046 Madrid (ES)**

(56) References cited:
**DE-A1-102011 051 236      JP-A- 2000 280 276
US-B1- 6 168 408**

• **"A NEW WAY TO INCREASE OUTPUT:
SWITCH-GATING", MODERN PLASTICS
INTERNATIONAL, MCGRAW-HILL,INC.
LAUSANNE, CH, vol. 1, no. 6, 1 June 1971
(1971-06-01), page 14/15, XP001176375, ISSN:
0026-8283**

**Description**

**Technical field**

The present invention is directed to a method of controlling a resin infusion process in which a plurality of resin infusion lines are disposed to simultaneously fill a plurality of moulds, such that the resin infusion process in all moulds can be terminated at the same time while keeping a constant resin flow out from the resin tank.

This invention is preferably applicable in the field of manufacturing of composite parts/pieces for transport applications such as aeronautic or aerospace aircrafts, as well as any application where the achievement of a good and low balance of weight/resistance in parts or components is desirable.

**Background of the invention**

There are currently several solutions that have been or may be applied for the control of the resin infusion process.

Document EP 1507647 B1 discloses the so-called CAPRI process ("Controlled atmospheric pressure resin infusion process"). This technology combines control of the inlet pressure by making it below ambient atmospheric pressure while maintaining a net compaction pressure of the preform during the entire infusion. The disadvantage of this technology is once the ambient atmospheric pressure is reached in the tank, the flow rate cannot be modified to increase or reduce it. With this process it is neither possible to control the flow rate in several parallel disposed resin infusion lines, making it unaffordable to terminate in a simultaneous manner the infusion process in parallel disposed moulds.

Another existing technology is the flow control through the variation of tube diameters (area of the cross section) of the installation for the infusion process. In this technology, the tube diameter is locally reduced through pinching (throttling) it. This is a technology which is difficult to automate and does not allow a large variation of flow rate with an accurate control, what is required for a flexible installation where different components are being processed at the same time.

The manufacturing of several composite parts through the resin infusion technology is sometimes carried out in a sequential manner, such that when the resin infusion process of one mould or preform is terminated, then the resin infusion process of the next mould begins. This poses a great time investment when several parts or pieces have to be manufactured.

However, documents US 6168408 B1 and JP 2000280276 disclose the simultaneous filling of several moulds.

**Summary of the invention**

With the aim of providing a solution to the abovementioned problems, the present invention refers to a method of controlling a resin infusion process.

The method of controlling a resin infusion process comprises infusing a resin flow from a resin tank into a plurality of moulds.

The method comprises:

- classifying the moulds according to their respective volumes, and;

- sequentially filling the moulds with resin, starting from the mould with the highest volume.

The method involves estimating the time that it takes to completely fill with resin each mould of the plurality of moulds.

After having begun with the resin infusion into the mould with the highest volume, the method involves starting the resin infusion in a further particular mould when the estimated time remaining for the complete filling of the mould with highest volume equals the estimated time for the complete filling of that further particular mould of the plurality of moulds.

Thanks to this filling strategy, it is achieved to complete finish filling each and every of the modules of the resin infusion facility almost simultaneously.

The method comprises performing the step of actuating on a pressure pump of the tank in order to achieve a target value of the pressure, $P_0$, within the tank, this target value of the pressure, $P_0$, within the tank allowing to keep a constant flow rate, Q, flowing out from the tank, wherein performing this step comprises:

- establishing a predetermined value, Q, for the resin flow rate flowing out of the tank and which is to be kept constant;

- calculating a target pressure value, $P_0$ (or r(t)), in the tank, derived from the predetermined value, Q;

- measuring the actual pressure value, y(t) (or P(t)), within the tank;

- calculating the difference, e(t), between the target pressure value, $P_0$, in the tank and the actual pressure value, y(t), in the tank;

- calculating a PID control command, u(t), derived from the calculated difference, e(t), and;

- inputting the control command, u(t), into an actuator acting on pressure pump of the tank.

The above described approach of actuating on the pressure, P0, in the tank, in order to keep the resin flow rate, Q, flowing out from the tank at a constant value is considered the most effective way of controlling the flow rate while maintaining a simple control philosophy, that avoids needing to control either the section of the distribution or line pipes, or the diameter of the connection between the line pipes and the moulds.

According to a particular embodiment of the method of controlling a resin infusion process, the time, $t_{end_i}$, for the complete filling of each mould "i" of the plurality of moulds is estimated according to the following formula:

$$t_{end_i} = \frac{\eta}{2\,DP\,k_i\,\rho^2\,S_i^2}\left(m_i + \frac{8\,\rho\,k_i\,S_i^2}{\pi}\left(\frac{l_i}{r_i^4} + \frac{L}{R^4}\right)\right)^2$$

wherein:

$\eta$ stands for the resin viscosity;
$\rho$ stands for the resin density;
$L$ stands for the longitude of a distribution pipe extending from the resin tank up to each line pipe;
$R$ stands for the radius of the distribution pipe;
$l_i$ stands for the longitude of a line pipe extending from the distribution pipe up to the mould "i";
$r_i$ stands for the radius of the line pipe;
$S_i$ stands for the equivalent section of the mould "i";
$k_i$ stands for the permeability of the mould "i";
$m_i$ stands for the resin mass inside mould "i" when said mould "i" is completely filled with resin, and;
$DP$ stands for the pressure drop between the bottom of the resin tank and a vacuum pump connected to all the moulds of the plurality of moulds.

According to one possible embodiment of the method, the target pressure value, $P_0$, derived from the predetermined value, Q, for the resin flow rate flowing out of the tank, is calculated according to the following formula:

$$P_0 = \frac{\dfrac{8\eta L}{\rho\pi R^4} - \left(\dfrac{8\eta l_i}{\rho\pi\rho r_i^4} + \dfrac{\eta z_i}{\rho k_i S_i}\right)*\dfrac{8\eta L}{\pi R^4}*A_i}{1 - \left(\dfrac{8\eta l_i}{\rho\pi r_i^4} + \dfrac{\eta z_i}{\rho k_i S_i}\right)*\rho*A_i} * Q - \rho g h + P_{vac}$$

where:

$\eta$ stands for the resin viscosity;

$\rho$ stands for the resin density;

$r_i$ stands for the radius of the line pipe in the resin line "i";

$l_i$ stands for the longitude of the line pipe in the resin line "i";

$R$ stands for the radius of the distribution pipe;

$L$ stands for the longitude of the distribution pipe;

$S_i$ stands for the section of the mould in the resin line "i";

$k_i$ stands for the permeability of the mould in the resin line "i";

$z_i$ stands for the distance that the resin has advanced inside the mould in the resin line "i" at each particular moment;

$h$ stands for the height of the resin column from the resin surface inside the resin tank to the bottom of the resin tank at each particular moment;

$P_{vac}$ stands for the pressure generated by the vacuum pump connected to all the moulds;

$g$ stands for the gravity acceleration;

$Q$ stands for the predetermined value of the resin flow rate flowing out from the tank and which is to be kept constant;

$P_0$ stands for the target value of the pressure in the tank;

and $A_i$ stands for a resin line coefficient which is calculated according to the following expresión:

$$A_i = \frac{1}{\dfrac{8\eta l_i}{\pi r_i^{\,4}} + \dfrac{\eta m_i}{\rho k_i S_i^{\,2}}}$$

where $m_i$ stands for the mass having entered into the mould in the resin line "i" at each particular moment.

The above referred expression allows to calculate, at each particulate moment during the resin infusion process, the value for the pressure in the tank, $P_0$, as a function of the desired flow rate, Q, flowing out from the resin tank and which is desired to be kept constant.

The present invention further refers to a resin infusion system.

The resin infusion system comprises a resin tank, a plurality of moulds, a distribution pipe connecting the resin tank with a plurality of line pipes, each line pipe connecting the distribution pipe with a mould of the plurality of moulds; a vacuum pump connected to the moulds; a pressure pump connected to the resin tank, and; a main valve connected at the outlet of the resin tank for controlling the flow of resin to the distribution pipe.

The resin infusion system additionally comprises:

-    a plurality of mould inlet valves, each mould inlet valve connected between each line pipe and each mould, and;
-    a controller connected to each mould inlet valve.

The controller is configured to perform the method of controlling a resin infusion process as described at the beginning of this section, i.e. the method allowing the sequential filling of the moulds according to their respective volumes and the estimated time it takes to completely fill each of the moulds of the plurality of moulds.

The resin infusion system comprises a pressure sensor inside the resin tank and a PID control loop module.

The PID control loop module comprises a control unit and an actuator, the control unit being configured to calculate the abovementioned PID control command, u(t), derived from the calculated difference, e(t). The PID control loop module being further configured to input the PID control command into the actuator, wherein the actuator is configured to act on the pressure pump of the resin tank.

Thanks to the system described above, it is possible to maintain the resin flow rate flowing out from the resin tank at a desired value, Q, by simply acting on the pressure pump of the tank with an actuator which acts upon receipt of a PID input signal, the PID input signal being generated upon comparison between the sensed actual pressure in the tank and a target pressure value, $P_0$, in the tank.

The present invention further refers to a computer implemented method for controlling a resin infusion process, for infusing resin from a resin tank into a plurality of resin moulds.

The computer implemented method comprises the steps of:

- acquiring a value for the volume of each mould of the plurality of resin moulds;

- organising a list of resin moulds ordered according the acquired volumes, wherein the first mould in the list is the mould with the highest volume and the last mould in the list is the mould with smallest volume;

- estimating the time that it takes to completely fill each mould;

- generating a plurality of sequenced filling orders for filling the resin moulds, starting with the filling order for the mould with highest volume, wherein the filling order for filling a further particular mould is generated once the time elapsed since the filling order for the mould with highest volume equals the estimated time for completely filling that further particular mould.

The computer implemented method comprises generating an actuation order for controlling the pressure, $P_0$, generated by a pressure pump connected to the resin tank, in order to control a resin flow rate, Q, flowing out from the resin tank.

This step of generating the actuation order for controlling the pressure, $P_0$, comprises the steps of:

- determining a desired value, Q, for the resin flow rate flowing out of the tank and which is to be kept constant;

- calculating a target pressure value, $P_0$ (or r(t)), in the tank, derived from the predetermined value, Q;

- acquiring the actual pressure value, y(t) (or P(t)), within the tank;

- calculating the difference, e(t), between the target pressure value, $P_0$, in the tank and the actual pressure value, y(t), in the tank;

- calculating a PID control command, u(t), derived from the calculated difference, e(t), and;

- inputting the control command, u(t), into an actuator acting on pressure pump of the tank.

According to a preferred embodiment of the computer implemented method, the step of estimating the time that it takes to completely fill each mould comprises:

- acquiring the following data:

  a value, $\eta$, for the resin viscosity;
  a value, $\rho$, for the resin density;
  a value, $L$, for the longitude of a distribution pipe extending from the resin tank up to each line pipe;
  a value, $R$, for the radius of a distribution pipe;
  a plurality of values, $l_i$, for the longitude of each line pipe extending from the distribution pipe up to each mould "i";
  a plurality of values, $r_i$, for the radius of each line pipe;
  a plurality of values, $S_i$, for the equivalent section of each mould "i";
  a plurality of values, $k_i$, for the permeability of each mould "i";
  a plurality of values, $m_i$, for the resin mass inside each mould "i" when said mould "i" is completely filled with resin;
  a value, $DP$, for the pressure drop between the bottom of the resin tank
  and a vacuum pump connected to all the moulds of the plurality of moulds;

  and

- estimating the time, $t_{end_i}$, that it takes to completely fill each mould, "i" according to the following formula:

$$t_{end_i} = \frac{\eta}{2\,DP\,k_i\,\rho^2\,S_i{}^2}\left(m_i + \frac{8\,\rho\,k_i\,S_i{}^2}{\pi}\left(\frac{l_i}{r_i{}^4} + \frac{L}{R^4}\right)\right)^2$$

Furthermore, according to one possible embodiment of the computer implemented method, acquiring the value, $DP$, for the pressure drop between the bottom of the resin tank and the vacuum pump connected to all the moulds of the plurality of moulds comprises the steps of:

- acquiring a value, $P_0$, for the pressure inside the resin tank;
- acquiring a value, $P_{vac}$, for the pressure generated by the vacuum pump, and;
- calculating the value, $DP$, according to the following formula:

$$DP = P_0 + \rho g h - P_{vac}$$

where

> $g$ stands for the gravity acceleration, and;
> $h$ stands for the height of the column of resin, from the resin surface inside the resin tank to the bottom of the resin tank.

According to one possible embodiment, for the purpose of calculating the target pressure value, $P_0$, in the tank, the computer implemented method comprises acquiring the following data:

> a value $\eta$ for the resin viscosity;
> a value $\rho$ for the resin density;
> a value $r_i$ for the radius of the line pipe in the resin line "i";
> a value $l_i$ for the longitude of the line pipe in the resin line "i";
> a value $R$ for the radius of the distribution pipe;
> a value $L$ for the longitude of the distribution pipe;
> a value $S_i$ for the section of the mould in the resin line "i";
> a value $k_i$ for the permeability of the mould in the resin line "i";
> a value $z_i$ for the distance that the resin has advanced inside the mould in the resin line "i" at each particular moment;
> a value $h$ for the height of the resin column from the resin surface inside the resin tank to the bottom of the resin tank at each particular moment;
> a value $P_{vac}$ for the pressure generated by the vacuum pump connected to all the moulds;
> a value $g$ for the gravity acceleration;
> the desired value $Q$ for the resin flow rate flowing out from the tank and which is to be kept constant;
> a value $m_i$ for the mass having entered into the mould in the resin line "i" at each particular moment, and;

calculating the following resin line coefficient:

$$A_i = \frac{1}{\frac{8\eta l_i}{\pi r_i{}^4} + \frac{\eta m_i}{\rho k_i S_i{}^2}}$$

Then, the computer implemented method comprises calculating the target pressure value, $P_0$, according to the following formula:

$$P_0 = \frac{\frac{8\eta L}{\rho \pi R^4} - \left(\frac{8\eta l_i}{\rho \pi \rho r_i^4} + \frac{\eta z_i}{\rho k_i S_i}\right) * \frac{8\eta L}{\pi R^4} * A_i}{1 - \left(\frac{8\eta l_i}{\rho \pi r_i^4} + \frac{\eta z_i}{\rho k_i S_i}\right) * \rho * A_i} * Q - \rho g h + P_{vac}$$

The present invention further refers to a computer program comprising instructions that, when executed in a computer, perform the computer implemented method described above.

Moreover, the present invention further refers to a computer readable medium comprising instructions that, when executed in a computer, perform the computer implemented method described above.

The above described method and system for controlling a resin infusion process allows for controlling the resin infusion in a plurality of resin infusion lines by simply actuating on the pressure inside the resin tank, allowing the simultaneous finishing of the filling process in every mould of the resin infusion facility, and minimising the air bubbles being formed in the resin inside the moulds due to a non-controlled resin infusion process. The control on the pressure allows for a quick filling of all the moulds, avoiding the formation of air bubbles in the resin which would have a negative impact on the quality of the composite pieces being manufactured.

## Brief description of the drawings

As a means for better understanding at least one embodiment of the present invention, the following set of drawings is introduced by way of schematic illustration and in a non-limitative manner.

Figure 1: Shows a schematic view of a single-line resin infusion facility.

Figure 2: Shows a schematic diagram of a PID-type control loop, for controlling the resin infusion process according one possible embodiment of the present invention.

Figure 3: Shows a schematic view of a 3-line resin infusion facility.

Figure 4: Shows a schematic view of a 3-line resin infusion facility with a PID-type control loop, according to one possible embodiment of the present invention.

Figure 5: Shows a schematic diagram of the mould filling sequence of a 3-line resin infusion facility, according to one possible embodiment of the present invention.

Figure 6: Shows the mass flow variation for the three moulds (each with different volume) of a 3-line resin infusion facility, where sequential mould filling is applied based on the resin mass present in the mould with highest volume.

Figure 7: Shows the mass flow variation for the three moulds (each with different volume) of a 3-line resin infusion facility, where sequential mould filling is applied based on the approximate filling time of each individual mould.

## Detailed description

The present invention, as already introduced, refers to a method of controlling a resin infusion process.

The method of the present invention is based on a double control: on the one hand, the method involves variably controlling the pressure of the resin tank (1) (applying moderate overpressures, typically less than 130.000 Pa), while the moulds (2) are kept at a pressure near the vacuum. On the other hand, the method involves sequentially filling each mould (2) of the plurality of moulds (2) of a multiple-line resin infusion facility.

For the sake of a clear explanation, the basic equations governing the resin infusion process are presented.

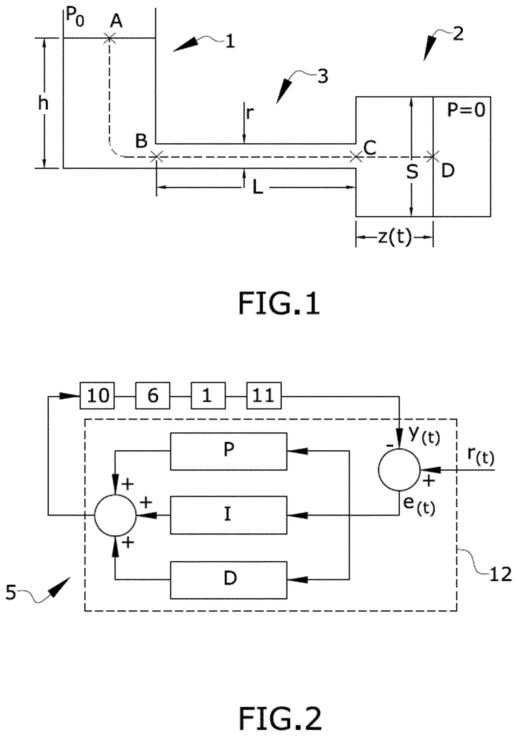

First of all, a schematic explanation of the resin infusion process of a single-line resin infusion facility is presented, referring to Figure 1.

The circuit "tank-pipe-mould" is considered a 1-dymension linear circuit (see Figure 1) which is perfectly sealed (there are no leakages of resin neither in the tank (1), pipe (3), valves (7, 8) nor in the mould (2)).

A pressure balance is made along a flow line {A, B, C, D} (see Equation 1).

Between points A and B, the potential energy of the flow in the column of resin inside the tank (1) is considered (where "$\rho$" stands for the resin density, and; "h" stands for the height of the resin column inside the tank (1)).

Between points B and C, the pressure drop in the pipe (3) due to the resin viscosity is considered, according to the Poiseuille relation (where "η" stands for the resin viscosity; "r" stands for the pipe radius, and; "L" stands for the pipe longitude).

Between points C and D, the pressure drop within the mould (2) is modelled according to Darcy relation, assuming that the mould (2) is porous (where "k" stands for the permeability of the mould (2) and "S" stands for the mould cross-section).

Finally, the following equation system can be established, where "Q" stands for the resin flow along the line {A, B, C, D}, and "z(t)" stands for the longitude that the resin has reached inside the mould (2), as a function of time.

$$\begin{cases} P_B = P_A + \rho g h \\ P_C = P_B - \dfrac{8\eta L Q}{\pi\, r^4} \\ P_D = P_C - \dfrac{\eta z(t) Q}{kS} \end{cases} \qquad \text{(Equation 1)}$$

By solving the above referred system of equations, the following expression for the resin flow can be obtained:

$$Q = \frac{k}{\eta} S \frac{P_0 + \rho g h - P}{z(t) + \frac{8kSL}{\pi r^4}} \qquad \text{(Equation 2)}$$

With the above expression (assuming that the pressure values inside the tank (1), $P_0$, and inside the mould (2), P, are kept constant), it can be appreciated that, as the resin advances inside the mould (2), the resin flow decreases.

In order to obtain a constant resin flow rate, two possible approaches may be assumed. The first approach consists on making the pipe radius vary. The second approach consists on making the pressure differential ($P_0$ - P) vary, where, as already said, $P_0$ is the pressure inside the tank (1) and P is the pressure within the mould (2).

For practical reasons, varying the radius of the pipe (3) is hardly feasible. Obtaining a constant resin flow rate implies increasing the radius of the pipe (3) as the resin penetrates the mould (2). Moreover, it would also be necessary to increase the section of the inlet connecting the pipe (3) with the mould (2). Thus, this option is not a preferred option.

Another solution consists on pricking the pipe (3), thus diverting part of the resin flow away from the mould inlet. This option allows controlling the resin flow at the beginning of the resin infusion, retaining part of the resin flow. This is a feasible solution; however, this solution does not provide an active and accurate flow control towards a predeterminate flow value.

For the abovementioned reasons, the second approach mentioned above is preferred, i.e. acting on the pressure differential ($P_0$ - P) between the tank (1) and the mould (2). Pressure is a parameter much easier to measure along the infusion line (by means of manometers or pressure gauges) and also much easier to control by means of vacuum or pressurised pumps.

In a preferred embodiment of the present invention, a PID-type control loop is used for the control of the resin infusion process. Figure 2 shows a schematic diagram of a PID-type control loop.

In Figure 2, "r(t)" is the desired value for $P_0$. It is obtained from Equation 2, based on the desired value, Q, for the resin flow, and on the actual (measured) values for "h" and "z(t)". Furthermore, in Figure 2, "y(t)" is the actual (measured) value for $P_0$. Thus, in Figure 2, "e(t)" is the difference between the desired and the actual value for $P_0$, according to the expression: e(t)= r(t) - y(t).

The value "e(t)" is fed to the PID control loop. After being processed by the corresponding PID control loop module (5), a control value (correction signal) "u(t)" is obtained and fed to the pressure pump (6) actuating on the tank's pressure, $P_0$.

The correction signal, "u(t)" obtained by the PID control loop module is:

$$u(t) = K_P e(t) + K_I \int e(t)\, dt + K_D \frac{de(t)}{dt} \qquad \text{(Equation 3)}$$

In the above expression, "$K_p$" stands for the coefficient of the PID's proportional submodule; "$K_I$" stands for the coefficient of the PID's integral submodule, and; "$K_D$" stands for the coefficient of the PID's derivative submodule".

The aim of the PID control loop module (5) is that it is able to correct the deviation in the desired resin flow rate, Q, in the minimum time possible, thus mitigating the effect of any disturbances acting on the resin infusion process.

The PID control loop module (5) regulates the resin infusion process thanks to a sensor (11) and an actuator (10).

The sensor (11) measures the current state (e.g. the actual pressure value, $P_0$, in the resin tank (1)) of the resin infusion line and provides an analogue or digital signal (representative of this state) to a control unit (12) of the PID control loop module (5)

The control unit (12) generates the signal that governs the actuator (10). The control unit (12) receives an external signal from the value to be reached (setpoint) (e.g. the desired/target pressure value in the resin tank (1)) from which the current point signal (measurement) is subtracted, thus obtaining the error signal e (t). The control unit (12) uses the output signal u (t) (manipulated variable call) to drive the actuator (10). This signal must be transformed to be compatible with the actuator (10) used.

The actuator (10) modifies the system (e.g. acting on the pressure pump (6) of the tank (1)) in a controlled way.

The proportional part of the PID control loop is intended to make the steady-state error approach zero. There is a limit value in the proportional coefficient, Kp, from which, in some cases, the system reaches higher values than desired. This phenomenon is called over-oscillation and, for safety reasons and as a general recommendation, it should not exceed 30%. The proportional part does not consider time, therefore, the best way to solve the permanent error and make the system contain some component that takes into account the variation with respect to time, is by including and configuring the integral and derivative actions.

The Integral control mode of the PID control loop allows reducing and eliminating the error in steady state, caused by external disturbances and which cannot be corrected by proportional control. Its purpose is to obtain a stable response from the system without stationary error, that is, to obviate the drawback of the offset (permanent deviation of the variable with respect to the set point) of the proportional band.

The derivative action of the PID control loop allows the error to be kept to a minimum by proportionally correcting it with the same speed that occurs and thus preventing the error from increasing. An unstable process corresponds to a large derived action time. When the derived action time is small, the variable oscillates too much in relation to the set point. The derived action is little used due to the sensitivity to the noise it manifests and the complications that this entails. The optimal derivative action time is the one that returns the variable to the set point with the minimum oscillations.

In order to achieve a constant resin flow rate throughout the infusion process, the PID is preferably used to act on the tank pressure, which according to Equation 2 allows acting on the infusion line flow.

By integrating Equation 2, the following analytic approximate value for the mould total filling time is obtained:

$$t_{end} \sim \frac{\eta}{2\,DP\,k\,\rho^2\,S^2} \qquad \text{(Equation 4)}$$

where "DP" stands for the pressure drop between the aforementioned points Band D of the resin infusion line.

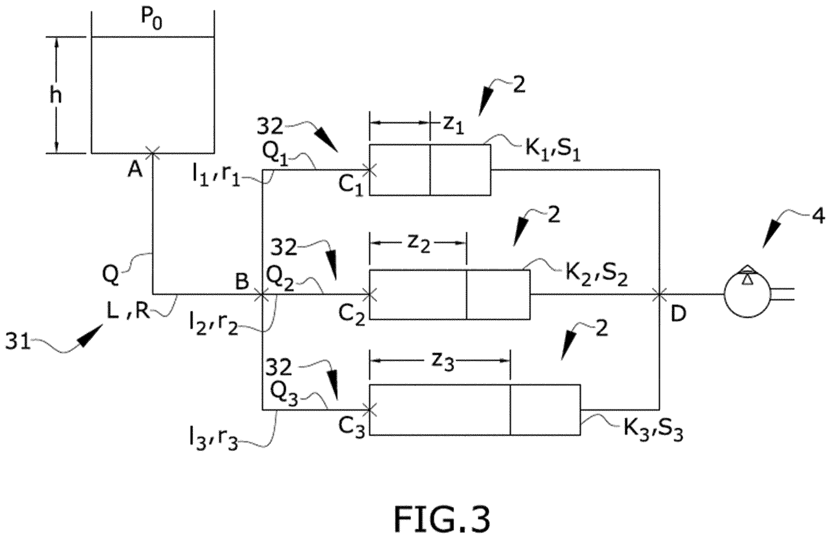

Once having presented the basic equations governing the resin infusion process of a single-line resin infusion facility, now a schematic explanation of the resin infusion process of a 3-line resin infusion facility is presented, referring to Figure 3.

As with the single-line resin infusion process, the circuit "tank-pipe-mould" is considered a 1-dymension linear circuit which is perfectly sealed (there are no leakages of resin neither in the tank (1), pipes (3), valves (7, 8) nor moulds (2)).

A pressure balance is made along a flow line {A, B, $C_i$, D} (see Equation 5), where sub-index "i" varies from 1 to 3, depending on the infusion line numeral.

In point A the potential energy of the resin column inside the tank (1) is considered, where "$\rho$" stands for the resin density, and; "h" stands for the height of the resin column inside the tank (1).

Between points A and B, the pressure drop in the distribution pipe (31) due to the resin viscosity is considered, according to the Poiseuille relation (where "$\eta$" stands for the resin viscosity; "R" stands for the distribution pipe radius; "L" stands for the distribution pipe longitude, and; "Q" for the mass flow in the distribution pipe (31)).

Between points B and $C_i$, the pressure drop in line pipe (32) "i" is considered, due to the resin viscosity, according to the Poiseuille relation (where "$\eta$" stands for the resin viscosity; "$r_i$" stands for the line pipe radius; "$l_i$" stands for the line pipe longitude, and; "$Q_i$" for the mass flow in the line pipe (32)).

Between points $C_i$ and D, the pressure drop within the mould (2) "i" is modelled according to Darcy relation, assuming that the mould (2) is porous (where "$k_i$" stands for the permeability of the mould (2) "i" and "$S_i$" stands for the cross-section of mould (2) "i"). Point D is connected to a vacuum pump (4) generating pressure "$P_{vac}$" close to zero.

Finally, the following equation system can be established, where "$z_i$" stands for the longitude that the resin has reached inside the mould (2) "i".

$$\begin{cases} P_A = P_0 + \rho g h \\ P_B = P_A - \dfrac{8\eta L}{\rho \pi R^4} Q \\ P_{Ci} = P_B - \dfrac{8\eta l_i}{\rho \pi r_i^4} Q_i \\ P_{vac} = P_{Ci} - \dfrac{\eta z_i}{\rho k_i S_i} Q_i \end{cases} \qquad \text{(Equation 5)}$$

By solving the above equation system (Equation 5), the following expression is obtained:

$$DP = P_0 + \rho g h - P_{vac} = \frac{8\eta L}{\rho \pi R^4} Q + \frac{8\eta l_i}{\rho \pi r_i^4} Q_i + \frac{\eta z_i}{\rho k_i S_i} Q_i \qquad \text{(Equation 6)}$$

where "DP" stands for the pressure drop between the aforementioned points A and D of the resin infusion facility.
The following expression can also be formulated, based on the principle of constant mass within the entire resin infusion facility:

$$\sum_{i=1}^{3} Q_i = Q \qquad \text{(Equation 7)}$$

Furthermore, expressing the longitude of resin inside the mould (2) as a function of the resin mass having been introduced into the mould (2), $z_i = \dfrac{m_i}{\rho S_i}$ (where "$m_i$" stands for the mass of resin inside mould "i" at a particular time), Equation 6 may be rewritten as follows:

$$Q_i = \left( \rho DP - \frac{8\eta L}{R^4} Q \right) \frac{1}{\frac{8\eta l_i}{\pi r_i^4} + \frac{\eta m_i}{\rho k_i S_i^2}} = \left( \rho DP - \frac{8\eta L}{R^4} Q \right) A_i \qquad \text{(Equation 8a)}$$

where

$$A_i = \frac{1}{\frac{8\eta l_i}{\pi r_i^4} + \frac{\eta m_i}{\rho k_i S_i^2}} \qquad \text{(Equation 8b)}$$

Combining Equation 7 and Equation 8, the mass flow in the entire resin infusion facility may be expressed as follows:

$$Q = \frac{\rho DP \sum_{i=1}^{3} A_i}{1 + \frac{8\eta L}{\pi R^4} \sum_{i=1}^{3} A_i} \qquad \text{(Equation 9)}$$

By means of a simulation software, time can be discretised (where $t_{j+1} = t_j + dt$) and the aforementioned equations may be solved in an iterative manner. The following scheme is followed:

$$m_{i,j} \rightarrow A_{i,j} \rightarrow Q_j \rightarrow Q_{i,j} \rightarrow dm_{i,j} = Q_{i,j} \times dt \rightarrow m_{i,j+1}$$
$$= m_{i,j} + dm_{i,j}$$

At the time "j", the masses "$m_{i,j}$" of resin introduced in each mould (2) "i" are known. Then, coefficients "$A_{i,j}$" are calculated by means of Equation 8b.

Once the coefficients "$A_{i,j}$" have been calculated, the total mass flow over the entire resin infusion facility is obtained, by means of Equation 9.

Thanks to Equation 8a, the partial flows over each line "i" are obtained. These partial flows allow obtaining the mass increments "$dm_{i,j}$" in the mould "i" at the time "j". Last, the mass "$m_{i,j+1}$" in each mould (2) "i" at the time "j+1" ($t_{j+1}$) is obtained.

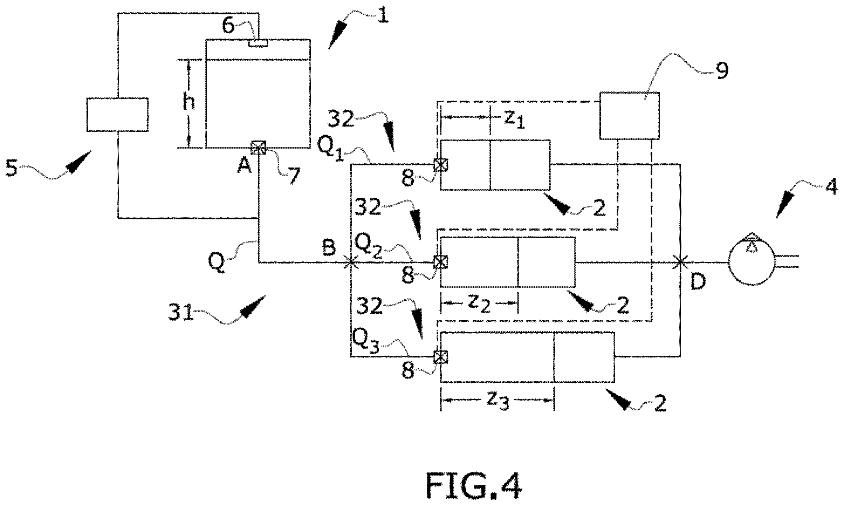

Figure 4 shows a schematic diagram of a PID-type control loop for the 3-line resin infusion facility.

As introduced before, independently controlling each infusion line "i" is unfeasible due to its extreme complexity, as it would imply providing each particular line with its own particular injector and resin evacuation in order to be able to independently control the resin flow rate in each particular line "i". This is why a control action on the tank's pressure is preferred, as shown in Figure 4 with the control loop module (5) acting on the pressure pump (6) of the tank (1).

The pressure value in the resin tank (1), $P_0$, may be expressed as a function of the desired value for the resin flow rate, Q, flowing out from the resin tank (1) (and which wants to be kept constant), as follows:

$$P_0 = \frac{\frac{8\eta L}{\rho \pi R^4} - \left(\frac{8\eta l_i}{\rho \pi r_i^4} + \frac{\eta z_i}{\rho k_i S_i}\right) * \frac{8\eta L}{\pi R^4} * A_i}{1 - \left(\frac{8\eta l_i}{\rho \pi r_i^4} + \frac{\eta z_i}{\rho k_i S_i}\right) * \rho * A_i} * Q - \rho g h + P_{vac} \qquad \text{(Equation 10)}$$

This is a dynamic equation which relates $P_0$ and Q, as a function of some magnitudes which vary with time, as h, $z_i$ and $A_i$. Since the latter variable magnitudes can be precisely determined over time thanks to sensors and processors, the dynamic relation between $P_0$ and Q expressed by Equation 10 can be precisely determined in each moment during the resin infusion process. Thus, the target value $P_0$ can be determined at each time.

As already stated, the aim of the present resin infusion control method is to simultaneously finish the resin infusion in all of the moulds (2) of the resin infusion facility, thereby being able to introduce all the composite parts in the oven simultaneously and start the resin curing at the same time.

Since each mould (2) has a particular size for the particular composite part that is to be manufactured, a sequential filling scheme is followed in order to start resin infusion in each particular mould (2) "i".

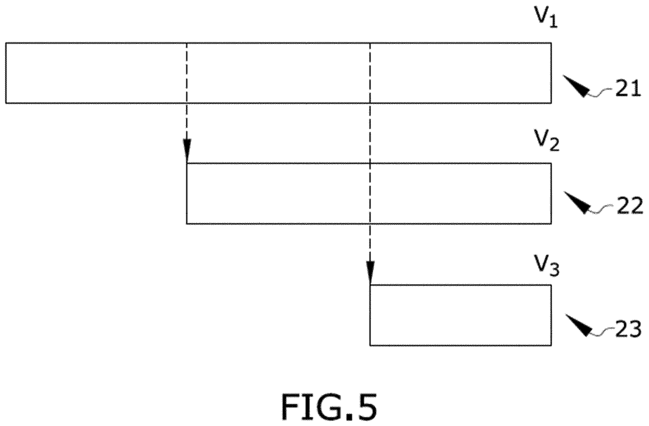

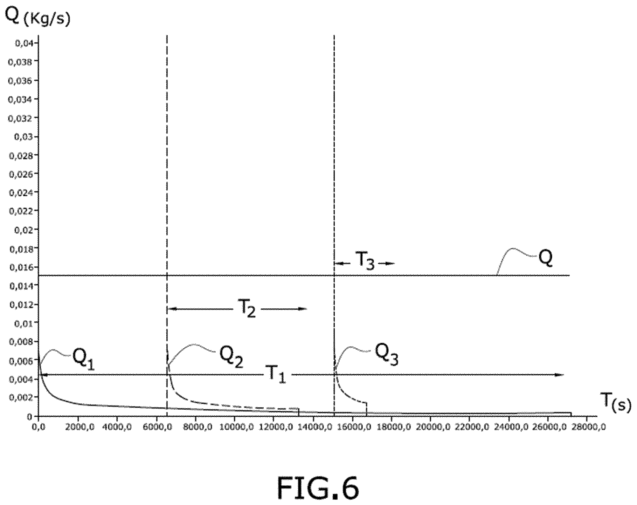

A first approach is to start the resin infusion in each mould (2) "i" taking the biggest mould volume (V1) as a reference (i.e. the mould (2) for which the resin infusion takes the longest time). The process starts by infusing resin in the biggest mould (21). When the remaining volume (v1) to be filled with resin in the biggest mould (21) equals the volume of the second biggest mould (22) (i.e. v1= V1 - V2), then the resin infusion starts in the second biggest mould (22). Finally, when the remaining volume (v1) to be filled with resin in the biggest mould (21) equals the volume of the smallest mould (23) (i.e. v1= V1 - V3), then the resin infusion starts in the smallest mould (23). This approach is schematically shown in Figure 5. However, with this approach, experimental results show (see Figure 6) that simultaneous end of the resin infusion process in each line "i" is not yet achieved satisfactorily.

In Figure 6, T1 stands for the time it takes to completely fill the biggest mould (21), T2 stands for the time it takes to completely fill the second biggest mould (22) and T3 stands for the time it takes to completely fill the smallest mould (23), with the filling approach described above. Furthermore, in Figure 6, Q stands for the reference mass flow to be kept constant flowing out from the resin tank (1), while Q1 stands for the mass flow in the line pipes (32) respectively connecting the distribution pipe (31) with the biggest mould (21), the second biggest mould (22) and the smallest mould (23).

Another approach is to separately calculate the time that it takes to completely fill with resin each of the moulds (2) "i".

Analog to what it has been done to get Equation 4, by integrating Equation 2, the filling time of each mould (2) "i" is expressed by the following expression:

$$t_{end_i} = \frac{\eta}{2\,DP\,k_i\,\rho^2\,S_i^2} \left(m_i + \frac{8\,\rho\,k_i\,S_i^2}{\pi}\left(\frac{l_i}{r_i^4} + \frac{L}{R^4}\right)\right)^2 \qquad \text{(Equation 11)}$$

where "$m_i$" stands for the mass of resin inside mould (2) "i" when said mould "i" is completely filled with resin.

Then, moulds (2) are classified according to the time it takes to fill each of them with resin. By means of Equation 11, the times $T_1$, $T_2$, $T_3$, that it takes to respectively fill the biggest resin mould (21), the second biggest resin mould (22) and the smallest resin mould (23) are calculated. When the time remaining for a complete filling of the biggest resin mould (21) equals the time for filling the second biggest resin mould (22) (t= $T_1$ - $T_2$), then the infusion starts in the second biggest resin mould (22). Last, when the time remaining for a complete filling of the biggest resin mould (21) equals the time for filling the smallest resin mould (23) (t= $T_1$ - $T_3$), then the infusion starts in the smallest resin mould (23).

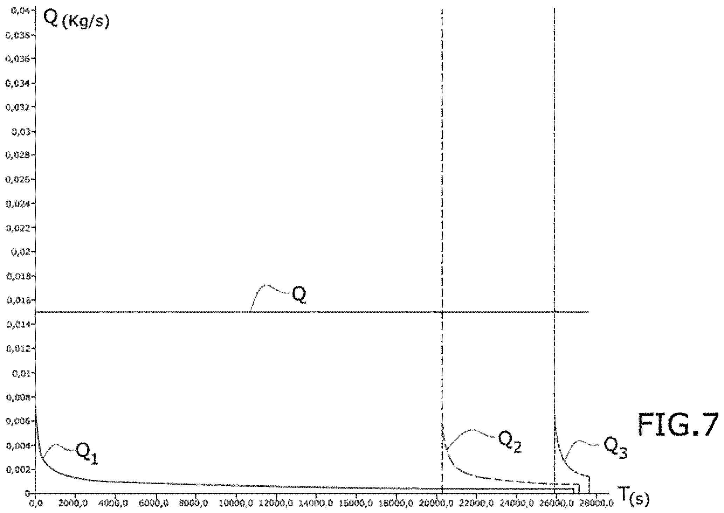

Figure 7 schematically shows that, by following the approach mentioned in the previous paragraph, the resin infusion process in each of the resin moulds (2) terminates almost simultaneously.

The sequential filling of the moulds is achieved by means of a controller (9), which governs the opening/closing of the inlet valves (8) of the moulds (2). The controller (9) may also govern the opening/closing of the main valve (7) controlling the flow of resin out from the tank (1).

Finally, by adjusting the reference value for the flow rate, Q, the reference value for $P_0$ is obtained (reference signal "r(t)" in Figure 2), and the time to completely and simultaneously fill all the resin moulds (2) can be reduced drastically compared to a resin infusion process without PID control loop.

**Claims**

1. Method of controlling a resin infusion process comprising infusing a resin flow from a resin tank (1) into a plurality of moulds (2), **characterised in that** the method comprises:

   - classifying the moulds (2) according to their respective volumes, and;
   - sequentially filling the moulds (2) with resin, starting from the mould (2) with the highest volume;
   wherein the method involves estimating the time that it takes to completely fill with resin each mould (2) of the plurality of moulds (2), and; after having begun with the resin infusion into the mould (2) with the highest volume, starting the resin infusion in a further particular mould (2) when the estimated time remaining for the complete filling of the mould (2) with highest volume equals the estimated time for the complete filling of that further particular mould (2) of the plurality of moulds (2);
   wherein the method comprises performing the step of actuating on a pressure pump of the tank (1) in order to achieve a target value of the pressure, $P_0$, within the tank (1), this target value of the pressure, $P_0$, within the tank (1) allowing to keep a constant flow rate, Q, flowing out from the tank (1), wherein performing this step comprises:

     - establishing a predetermined value, Q, for the resin flow rate flowing out of the tank (1) and which is to be kept constant;
     - calculating a target pressure value, $P_0$, in the tank (1), derived from the predetermined value, Q;
     - measuring the actual pressure value, y(t), within the tank (1);
     - calculating the difference, e(t), between the target pressure value, $P_0$, in the tank (1) and the actual pressure value, y(t), in the tank (1);
     - calculating a PID control command, u(t), derived from the calculated difference, e(t), and;
     - inputting the control command, u(t), into an actuator (10) acting on pressure pump (4) of the tank (1).

2. Method of controlling a resin infusion process according to claim 1, **characterised in that** the time, $t_{end_i}$, for the complete filling of each mould (2) "i" of the plurality of moulds (2) is estimated according to the following formula:

$$t_{end_i} = \frac{\eta}{2\,DP\,k_i\,\rho^2\,S_i^2} \left( m_i + \frac{8\,\rho\,k_i\,S_i^2}{\pi} \left( \frac{l_i}{r_i^4} + \frac{L}{R^4} \right) \right)^2$$

wherein:

   $\eta$ stands for the resin viscosity;
   $\rho$ stands for the resin density;
   $L$ stands for the longitude of a distribution pipe (31) extending from the resin tank (1) up to each line pipe (32);
   $R$ stands for the radius of the distribution pipe (31);
   $l_i$ stands for the longitude of a line pipe (32) extending from the distribution pipe (31) up to the mould (2) "i";
   $r_i$ stands for the radius of the line pipe (32);

$S_i$ stands for the equivalent section of the mould (2) "i";
$k_i$ stands for the permeability of the mould (2) "i";
$m_i$ stands for the resin mass inside mould (2) "i" when said mould (2) "i" is completely filled with resin, and;
$DP$ stands for the pressure drop between the bottom of the resin tank (1) and a vacuum pump (4) connected to all the moulds (2) of the plurality of moulds (2).

3. Method of controlling a resin infusion process according to claim 1, **characterised in that** the target pressure value, $P_0$, derived from the predetermined value, Q, for the resin flow rate flowing out of the tank (1), is calculated according to the following formula:

$$P_0 = \frac{\frac{8\eta L}{\rho \pi R^4} - \left(\frac{8\eta l_i}{\rho \pi \rho r_i{}^4} + \frac{\eta z_i}{\rho k_i S_i}\right) * \frac{8\eta L}{\pi R^4} * A_i}{1 - \left(\frac{8\eta l_i}{\rho \pi r_i{}^4} + \frac{\eta z_i}{\rho k_i S_i}\right) * \rho * A_i} * Q - \rho g h + P_{vac}$$

where:

$\eta$ stands for the resin viscosity;
$\rho$ stands for the resin density;
$r_i$ stands for the radius of the line pipe (32) in the resin line "i";
$l_i$ stands for the longitude of the line pipe (32) in the resin line "i";
$R$ stands for the radius of the distribution pipe (31);
$L$ stands for the longitude of the distribution pipe (31);
$S_i$ stands for the section of the mould (2) in the resin line "i";
$k_i$ stands for the permeability of the mould (2) in the resin line "i";
$z_i$ stands for the distance that the resin has advanced inside the mould (2) in the resin line "i" at each particular moment;
$h$ stands for the height of the resin column from the resin surface inside the resin tank (1) to the bottom of the resin tank (1) at each particular moment;
$P_{vac}$ stands for the pressure generated by the vacuum pump (4) connected to all the moulds (2);
$g$ stands for the gravity acceleration;
$Q$ stands for the predetermined value of the resin flow rate flowing out from the tank (1) and which is to be kept constant;
$P_0$ stands for the target value of the pressure in the tank (1);
and $A_i$ stands for a resin line coefficient which is calculated according to the following expresión:

$$A_i = \frac{1}{\frac{8\eta l_i}{\pi r_i{}^4} + \frac{\eta m_i}{\rho k_i S_i{}^2}}$$

where $m_i$ stands for the mass having entered into the mould (2) in the resin line "i" at each particular moment;

4. Resin infusion system comprising a resin tank (1), a plurality of moulds (2), a distribution pipe (31) connecting the resin tank (1) with a plurality of line pipes (32), each line pipe (32) connecting the distribution pipe (31) with a mould (2) of the plurality of moulds (2); a vacuum pump (4) connected to the moulds (2); a pressure pump (6) connected to the resin tank (1); a main valve (7) connected at the outlet of the resin tank (1) for controlling the flow of resin to the distribution pipe (31), **characterised in that** the resin infusion system additionally comprises:

- a plurality of mould inlet valves (8), each mould inlet valve (8) connected between each line pipe (32) and each mould (2);
- a controller (9) connected to each mould inlet valve (8);
wherein the controller (9) is configured to perform the method of controlling a resin infusion process according to claims 1 or 2;

wherein the resin infusion system comprises a pressure sensor (11) inside the resin tank (1) and a PID control loop module (5), the PID control loop module (5) comprising a control unit (12) and an actuator (10), the control unit (12) being configured to calculate the PID control command of Claim 1 and to input the PID control command into the actuator (10), the actuator (10) being configured to act on the pressure pump (6) of the resin tank (1).

5. Computer implemented method for controlling a resin infusion process, for infusing resin from a resin tank (1) into a plurality of resin moulds (2), **characterised in that** the computer implemented method comprises the steps of:

- acquiring a value for the volume of each mould (2) of the plurality of resin moulds (2);
- organising a list of resin moulds (2) ordered according the acquired volumes, wherein the first mould (2) in the list is the mould (2) with the highest volume and the last mould (2) in the list is the mould (2) with smallest volume;
- estimating the time that it takes to completely fill each mould (2);
- generating a plurality of sequenced filling orders for filling the resin moulds (2), starting with the filling order for the mould (2) with highest volume, wherein the filling order for filling a further particular mould (2) is generated once the time elapsed since the filling order for the mould (2) with highest volume equals the estimated time for completely filling that further particular mould (2);

wherein the computer implemented method comprises generating an actuation order for controlling the pressure, $P_0$, generated by a pressure pump (4) connected to the resin tank (1), in order to control a resin flow rate, Q, flowing out from the resin tank (1), wherein generating the actuation order for controlling the pressure, $P_0$, comprises the steps of:

- determining a desired value, Q, for the resin flow rate flowing out of the tank (1) and which is to be kept constant;
- calculating a target pressure value, $P_0$, in the tank (1), derived from the predetermined value, Q;
- acquiring the actual pressure value, y(t), within the tank (1);
- calculating the difference, e(t), between the target pressure value, $P_0$, in the tank (1) and the actual pressure value, y(t), in the tank (1);
- calculating a PID control command, u(t), derived from the calculated difference, e(t), and;
- inputting the control command, u(t), into an actuator (10) acting on pressure pump (4) of the tank (1).

6. Computer implemented method for controlling a resin infusion process according to claim 5, **characterised in that** estimating the time that it takes to completely fill each mould (2) comprises:

- acquiring the following data:

a value, $\eta$, for the resin viscosity;
a value, $\rho$, for the resin density;
a value, $L$, for the longitude of a distribution pipe (31) extending from the resin tank (1) up to each line pipe (32);
a value, $R$, for the radius of a distribution pipe (31);
a plurality of values, $l_i$, for the longitude of each line pipe (32) extending from the distribution pipe (31) up to each mould (2) "i";
a plurality of values, $r_i$, for the radius of each line pipe (32);
a plurality of values, $S_i$, for the equivalent section of each mould (2) "i";
a plurality of values, $k_i$, for the permeability of each mould (2) "i";
a plurality of values, $m_i$, for the resin mass inside each mould (2) "i" when said mould (2) "i" is completely filled with resin;
a value, $DP$, for the pressure drop between the bottom of the resin tank (1) and a vacuum pump (4) connected to all the moulds (2) of the plurality of moulds (2);

and
- estimating the time, $t_{end_i}$, that it takes to completely fill each mould (2), "i" according to the following formula:

$$t_{end_i} = \frac{\eta}{2\,DP\,k_i\,\rho^2\,S_i{}^2}\left(m_i + \frac{8\,\rho\,k_i\,S_i{}^2}{\pi}\left(\frac{l_i}{r_i{}^4} + \frac{L}{R^4}\right)\right)^2$$

7. Computer implemented method for controlling a resin infusion process according to claim 6, **characterised in that** acquiring the value, *DP,* for the pressure drop between the bottom of the resin tank (1) and a vacuum pump (4) connected to all the moulds (2) of the plurality of moulds (2) comprises the steps of:

    - acquiring a value, $P_0$, for the pressure inside the resin tank (1);
    - acquiring a value, $P_{vac}$, for the pressure generated by the vacuum pump (4), and;
    - calculating the value, *DP,* according to the following formula:

$$DP = P_0 + \rho g h - P_{vac}$$

where

    *g* stands for the gravity acceleration, and;
    *h* stands for the height of the column of resin, from the resin surface inside the resin tank (1) to the bottom of the resin tank (1).

8. Computer implemented method for controlling a resin infusion process according to claim 5, **characterised in that** it comprises acquiring the following data:

    a value $\eta$ for the resin viscosity;
    a value $\rho$ for the resin density;
    a value $r_i$ for the radius of the line pipe (32) in the resin line "i";
    a value $l_i$ for the longitude of the line pipe (32) in the resin line "i";
    a value $R$ for the radius of the distribution pipe (31);
    a value $L$ for the longitude of the distribution pipe (31);
    a value $S_i$ for the section of the mould (2) in the resin line "i";
    a value $k_i$ for the permeability of the mould (2) in the resin line "i";
    a value $z_i$ for the distance that the resin has advanced inside the mould (2) in the resin line "i" at each particular moment;
    a value *h* for the height of the resin column from the resin surface inside the resin tank (1) to the bottom of the resin tank (1) at each particular moment;
    a value $P_{vac}$ for the pressure generated by the vacuum pump (4) connected to all the moulds (2);
    a value *g* for the gravity acceleration;
    the desired value *Q* for the resin flow rate flowing out from the tank (1) and which is to be kept constant;
    a value $m_i$ for the mass having entered into the mould (2) in the resin line "i" at each particular moment;
    wherein the computer implemented method comprises calculating the following resin line coefficient:

$$A_i = \cfrac{1}{\cfrac{8\eta l_i}{\pi r_i^{\,4}} + \cfrac{\eta m_i}{\rho k_i S_i^{\,2}}}$$

and wherein the computer implemented method comprises calculating the target pressure value, $P_0$, according to the following formula:

$$P_0 = \cfrac{\cfrac{8\eta L}{\rho \pi R^4} - \left(\cfrac{8\eta l_i}{\rho \pi \rho r_i^{\,4}} + \cfrac{\eta z_i}{\rho k_i S_i}\right) * \cfrac{8\eta L}{\pi R^4} * A_i}{1 - \left(\cfrac{8\eta l_i}{\rho \pi r_i^{\,4}} + \cfrac{\eta z_i}{\rho k_i S_i}\right) * \rho * A_i} * Q - \rho g h + P_{vac}$$

9. Computer program **characterised in that** it comprises instructions that, when executed in a computer, perform the computer implemented method of any of the claims 5 to 8.

10. Computer readable medium **characterised in that** it comprises instructions that, when executed in a computer, perform the computer implemented method of any of the claims 5 to 8.

**Patentansprüche**

1. Verfahren zur Steuerung eines Harzinfusionsprozesses, umfassend das Einleiten eines Harzflusses aus einem Harztank (1) in eine Vielzahl von Formen (2) 2 p, **dadurch gekennzeichnet, dass** das Verfahren Folgendes umfasst:

    - Klassifizieren der Formen (2) nach ihren jeweiligen Volumina und;
    - sequentielles Füllen der Formen (2) mit Harz, beginnend mit der Form (2) mit dem höchsten Volumen;

    wobei das Verfahren das Schätzen der Zeit beinhaltet, die benötigt wird, um jede Form (2) der Vielzahl von Formen (2) vollständig mit Harz zu füllen, und nach Beginn der Harzinfusion in die Form (2) mit dem höchsten Volumen, Starten der Harzinfusion in einer weiteren einzelnen Form (2), wenn die geschätzte Zeit, die für das vollständige Füllen der Form (2) mit dem höchsten Volumen verbleibt, gleich der geschätzten Zeit für das vollständige Füllen dieser weiteren einzelnen Form (2) der Vielzahl von Formen (2) ist;
    wobei das Verfahren das Ausführen des Schritts zur Betätigung einer Druckpumpe am Tank (1) umfasst, um einen Zielwert des Drucks $P_o$ innerhalb des Tanks (1) zu erreichen, wobei dieser Zielwert des Drucks $P_o$ innerhalb des Tanks (1) es ermöglicht, eine konstante Durchflussrate Q aufrechtzuerhalten, die aus dem Tank (1) ausströmt, wobei das Durchführen dieses Schritts Folgendes umfasst:

    - Festlegen eines vorbestimmten Werts Q für die Harzdurchflussrate, die aus dem Tank (1) fließt und die konstant gehalten werden muss;
    - Berechnen eines Solldruckwerts $P_o$ im Tank (1), abgeleitet aus dem vorbestimmten Wert Q;
    - Messen des tatsächlichen Druckwerts y(t) innerhalb des Tanks (1);
    - Berechnen der Differenz e(t) zwischen dem Solldruckwert $P_o$ im Tank (1) und dem Istdruckwert y(t) im Tank (1);
    - Berechnen eines PID-Steuerbefehls u(t), der aus der berechneten Differenz e(t) abgeleitet wird, und;
    - Eingeben des Steuerbefehls u(t) in einen Aktuator (10), der auf die Druckpumpe (4) des Tanks (1) wirkt.

2. Verfahren zum Steuern eines Harzinfusionsprozesses nach Anspruch 1, **dadurch gekennzeichnet, dass** die Zeit $t_{end}$, für das vollständige Befüllen jeder Form (2) "i" der Vielzahl von Formen (2) gemäß der folgenden Formel geschätzt wird:

$$t_{end_i} = \frac{\eta}{2\,DP\,k_i\,\rho^2\,S_i{}^2}\left(m_i + \frac{8\,\rho\,k_i\,S_i{}^2}{\pi}\left(\frac{l_i}{r_i{}^4} + \frac{L}{R^4}\right)\right)^2$$

wobei:

    $\eta$ für die Harzviskosität steht;
    $p$ für die Harzdichte steht;
    $L$ für die Länge eines Verteilerrohrs (31) steht, das sich vom Harztank (1) bis zu jedem Leitungsrohr (32) erstreckt;
    $R$ für den Radius des Verteilerrohrs (31) steht;
    $l_i$ für die Länge eines Leitungsrohrs (32) steht, das sich vom Verteilerrohr (31) bis zur Form (2) "i" erstreckt;
    $r_i$ für den Radius des Leitungsrohrs (32) steht;
    $S_i$ für den äquivalenten Abschnitt der Form (2) "i" steht;
    $k_i$ für die Durchlässigkeit der Form (2) "i" steht;
    $m_i$ für die Harzmasse in der Form (2) "i" steht, wenn die Form (2) "i" vollständig mit Harz gefüllt ist, und;
    $DP$ für den Druckabfall zwischen dem Boden des Harztanks (1) und einer Vakuumpumpe (4) steht, die mit allen Formen (2) der Vielzahl von Formen (2) verbunden ist.

3. Verfahren zur Steuerung eines Harzinfusionsprozesses nach Anspruch 1, **dadurch gekennzeichnet, dass** der aus dem vorbestimmten Wert Q abgeleitete Solldruckwert $P_o$ für den aus dem Tank (1) fließenden Harzdurchfluss nach der folgenden Formel berechnet wird:

$$P_0 = \frac{\frac{8\eta L}{\rho \pi R^4} - \left(\frac{8\eta l_i}{\rho \pi \rho r_i{}^4} + \frac{\eta z_i}{\rho k_i S_i}\right) * \frac{8\eta L}{\pi R^4} * A_i}{1 - \left(\frac{8\eta l_i}{\rho \pi r_i{}^4} + \frac{\eta z_i}{\rho k_i S_i}\right) * \rho * A_i} * Q - \rho g h + P_{vac}$$

wobei:

$\eta$ für die Harzviskosität steht;

$p$ für die Harzdichte steht;

$r_i$ für den Radius des Leitungsrohrs (32) in der Harzleitung "i" steht;

$li$ für die Länge des Leitungsrohrs (32) in der Harzleitung "i" steht;

$R$ für den Radius des Verteilerrohrs (31) steht;

$L$ für die Länge des Verteilerrohrs (31) steht;

$S_i$ für den Abschnitt der Form (2) in der Harzleitung "i" steht;

$k_i$ für die Durchlässigkeit der Form (2) in der Harzleitung "i" steht;

$Zi$ für die Strecke steht, die das Harz in der Harzleitung "i" in jedem bestimmten Moment innerhalb der Form (2) zurückgelegt hat;

$h$ für die Höhe der Harzsäule von der Harzoberfläche innerhalb des Harztanks (1) bis zum Boden des Harztanks (1) zu jedem bestimmten Zeitpunkt steht;

$P_{vac}$ für den Druck steht, der von der Vakuumpumpe (4) erzeugt wird, die mit allen Formen (2) verbunden ist;

$g$ für die Schwerkraftbeschleunigung steht;

$Q$ für den vorgegebenen Wert der aus dem Tank (1) abfließenden und konstant zu haltenden Harzdurchflussrate steht;

$P_0$ für den Sollwert des Drucks im Tank (1) steht;

und $Ai$ für einen Harzleitungs-Koeffizienten steht, der nach folgendem Ausdruck berechnet wird:

$$A_i = \frac{1}{\frac{8\eta l_i}{\pi r_i{}^4} + \frac{\eta m_i}{\rho k_i S_i{}^2}}$$

wobei $m_i$ für die Masse steht, die in der Harzleitung "i" in jedem bestimmten Moment in die Form (2) eingeströmt ist;

4. Harzinfusionssystem, umfassend einen Harztank (1), eine Vielzahl von Formen (2), ein Verteilerrohr (31), das den Harztank (1) mit einer Vielzahl von Leitungsrohren (32) verbindet, wobei jedes Leitungsrohr (32) das Verteilerrohr (31) mit einer Form (2) der Vielzahl von Formen (2) verbindet; eine Vakuumpumpe (4), die mit den Formen (2) verbunden ist; eine Druckpumpe (6), die mit dem Harztank (1) verbunden ist; ein Hauptventil (7), das am Auslass des Harztanks (1) verbunden ist, um den Fluss des Harzes in das Verteilerrohr (31) zu steuern, **dadurch gekennzeichnet, dass** das Harzinfusionssystem zusätzlich Folgendes umfasst:

- eine Vielzahl von Formeinlassventilen (8), wobei jedes Formeinlassventil (8) zwischen jedem Leitungsrohr (32) und jeder Form (2) angeschlossen ist;
- eine Steuereinheit (9), die mit jedem Formeinlassventil (8) verbunden ist;

wobei die Steuereinheit (9) konfiguriert ist, das Verfahren zum Steuern eines Harzinfusionsprozesses nach Anspruch 1 oder 2 durchzuführen;
wobei das Harzinfusionssystem einen Drucksensor (11) im Harztank (1) und ein PID-Regelkreismodul (5) umfasst, wobei das PID-Regelkreismodul (5) eine Steuereinheit (12) und einen Aktuator (10) umfasst, wobei die Steuereinheit (12) konfiguriert ist, den PID-Regelbefehl nach Anspruch 1 zu berechnen und den PID-Regelbefehl in den Aktuator (10) einzugeben, wobei der Aktuator (10) konfiguriert ist, auf die Druckpumpe (6) des Harztanks (1) zu wirken -

5. Computerimplementiertes Verfahren zur Steuerung eines Harzinfusionsprozesses, um Harz aus einem Harztank (1) in eine Vielzahl von Harzformen (2) zu füllen, **dadurch gekennzeichnet, dass** das computerimplementierte Verfahren die folgenden Schritte umfasst:

- Erfassen eines Werts für das Volumen jeder Form (2) der Vielzahl von Harzformen (2);
- Organisieren einer Liste von Harzformen (2), die nach den erfassten Volumina geordnet sind, wobei die erste Form (2) in der Liste die Form (2) mit dem höchsten Volumen ist und die letzte Form (2) in der Liste die Form (2) mit dem kleinsten Volumen ist;
- Schätzen der Zeit, die benötigt wird, um jede Form (2) vollständig zu füllen;
- Erzeugen einer Vielzahl von aufeinanderfolgenden Füllaufträgen zum Füllen der Harzformen (2), beginnend mit dem Füllauftrag für die Form (2) mit dem höchsten Volumen, wobei der Füllauftrag zum Füllen einer weiteren einzelnen Form (2) erzeugt wird, sobald die Zeit verstrichen ist, in der der Füllauftrag für die Form (2) mit dem höchsten Volumen gleich der geschätzten Zeit für das vollständige Füllen dieser weiteren einzelnen Form (2) ist;

wobei das computerimplementierte Verfahren das Erzeugen eines Betätigungsbefehls zum Steuern des Drucks $P_o$ umfasst, der von einer mit dem Harztank (1) verbundenen Druckpumpe (4) erzeugt wird, um eine Harzdurchflussrate Q zu steuern, die aus dem Harztank (1) ausströmt, wobei das Erzeugen des Betätigungsbefehls zum Steuern des Drucks $P_o$ die folgenden Schritte umfasst:

- Bestimmen eines gewünschten Werts, Q, für die Harzdurchflussrate, die aus dem Tank (1) fließt und die konstant gehalten werden muss;
- Berechnen eines Solldruckwerts $P_o$ im Tank (1), abgeleitet aus dem vorbestimmten Wert Q;
- Erfassen des tatsächlichen Druckwerts y(t) innerhalb des Tanks (1);
- Berechnen der Differenz e(t) zwischen dem Solldruckwert Po im Tank (1) und dem Istdruckwert y(t) im Tank (1);
- Berechnen eines PID-Steuerbefehls u(t), der aus der berechneten Differenz e(t) abgeleitet wird, und;
- Eingeben des Steuerbefehls u(t) in einen Aktuator (10), der auf die Druckpumpe (4) des Tanks (1) wirkt.

6. Computerimplementiertes Verfahren zum Steuern eines Harzinfusionsprozesses nach Anspruch 5, **dadurch gekennzeichnet, dass** das Schätzen der Zeit, die benötigt wird, um jede Form (2) vollständig zu füllen, Folgendes umfasst:

- Erfassen der folgenden Daten:

einen Wert $\eta$ für die Harzviskosität;
einen Wert, $p$, für die Harzdichte;
einen Wert, $L$, für die Länge eines Verteilungsrohrs (31), das sich von dem Harztank (1) bis zu jedem Leitungsrohr (32) erstreckt;
einen Wert $R$ für den Radius eines Verteilungsrohrs (31);
eine Vielzahl von Werten $l_j$ für die Länge jedes Leitungsrohrs (32), das sich von dem Verteilungsrohr (31) bis zu jeder Form (2) "i" erstreckt;
eine Vielzahl von Werten $r_i$ für den Radius jedes Leitungsrohrs (32);
eine Vielzahl von Werten $S_j$ für den äquivalenten Abschnitt jeder Form (2) "i";
eine Vielzahl von Werten $K_j$ für die Durchlässigkeit jeder Form (2) "i";
eine Vielzahl von Werten $m_j$ für die Harzmasse innerhalb jeder Form (2) "i", wenn die Form (2) "i" vollständig mit Harz gefüllt ist;
einen Wert $DP$ für den Druckabfall zwischen dem Boden des Harztanks (1) und einer Vakuumpumpe (4), die mit allen Formen (2) der Vielzahl von Formen (2) verbunden ist;

und
- Schätzen der Zeit $t_{end\ l'}$, die benötigt wird, um jede Form (2) "i" vollständig zu füllen, gemäß der folgenden Formel:

$$t_{end_i} = \frac{\eta}{2\, DP\, k_i\, \rho^2\, S_i{}^2} \left( m_i + \frac{8\, \rho\, k_i\, S_i{}^2}{\pi} \left( \frac{l_i}{r_i{}^4} + \frac{L}{R^4} \right) \right)^2$$

7. Computerimplementiertes Verfahren zum Steuern eines Harzinfusionsprozesses nach Anspruch 6, **dadurch ge-**

**kennzeichnet, dass** das Erfassen des Werts $DP$ für den Druckabfall zwischen dem Boden des Harztanks (1) und einer Vakuumpumpe (4), die mit allen Formen (2) der Vielzahl von Formen (2) verbunden ist, die folgenden Schritte umfasst:

- Erfassen eines Werts $P_o$ für den Druck innerhalb des Harztanks (1);
- Erfassen eines Werts $P_{vac}$ für den von der Vakuumpumpe (4) erzeugten Druck und;
- Berechnen des Wertes $DP$ gemäß der folgenden Formel:

$$DP = P_0 + \rho g h - P_{vac}$$

wobei

$g$ für die Schwerkraftbeschleunigung steht;
$h$ für die Höhe der Harzsäule von der Harzoberfläche innerhalb des Harztanks (1) bis zum Boden des Harztanks (1) steht.

8. Computerimplementiertes Verfahren zum Steuern eines Harzinfusionsprozesses nach Anspruch 5, **dadurch gekennzeichnet, dass** es das Erfassen der folgenden Daten umfasst:

einen Wert $\eta$ für die Harzviskosität;
einen Wert $p$ für die Harzdichte;
einen Wert $r_i$ für den Radius des Leitungsrohrs (32) in der Harzleitung "i";
einen Wert $l_i$ für die Länge des Leitungsrohrs (32) in der Harzleitung "i";
einen Wert $R$ für den Radius des Verteilungsrohrs (31);
einen Wert $L$ für die Länge des Verteilungsrohrs (31);
einen Wert $S_i$ für den Abschnitt der Form (2) in der Harzleitung "i";
einen Wert $k_i$ für die Durchlässigkeit der Form (2) in der Harzleitung "i";
einen Wert $Z_i$ für die Strecke, die das Harz in der Form (2) in der Harzleitung "i" zu jedem bestimmten Zeitpunkt zurückgelegt hat;
einen Wert $h$ für die Höhe der Harzsäule von der Harzoberfläche im Harztank (1) bis zum Boden des Harztanks (1) zu jedem bestimmten Zeitpunkt;
einen Wert $P_{vac}$ für den Druck, der von der Vakuumpumpe (4) erzeugt wird, die mit allen Formen (2) verbunden ist;
einen Wert $g$ für die Schwerkraftbeschleunigung;
den gewünschten Wert $Q$ für den aus dem Tank (1) abfließenden und konstant zu haltenden Harzdurchfluss;
einen Wert $m_i$ für die Masse, die zu jedem bestimmten Zeitpunkt in die Form (2) in der Harzleitung "i" eingeströmt ist;
wobei das computerimplementierte Verfahren das Berechnen des folgenden Harzleitungs-Koeffizienten umfasst:

$$A_i = \frac{1}{\dfrac{8\eta l_i}{\pi r_i^{\,4}} + \dfrac{\eta m_i}{\rho k_i S_i^{\,2}}}$$

und wobei das computerimplementierte Verfahren das Berechnen des Solldruckwerts $P_o$ gemäß der folgenden Formel umfasst:

$$P_0 = \frac{\dfrac{8\eta L}{\rho \pi R^4} - \left(\dfrac{8\eta l_i}{\rho \pi \rho r_i^{\,4}} + \dfrac{\eta z_i}{\rho k_i S_i}\right) * \dfrac{8\eta L}{\pi R^4} * A_i}{1 - \left(\dfrac{8\eta l_i}{\rho \pi r_i^{\,4}} + \dfrac{\eta z_i}{\rho k_i S_i}\right) * \rho * A_i} * Q - \rho g h + P_{vac}$$

9. Computerprogramm, **dadurch gekennzeichnet, dass** es Anweisungen umfasst, die, wenn sie in einem Computer ausgeführt werden, das computerimplementierte Verfahren nach den Ansprüchen 5 bis 8 ausführen.

10. Computerlesbares Medium, **dadurch gekennzeichnet, dass** es Anweisungen umfasst, die, wenn sie in einem Computer ausgeführt werden, das computerimplementierte Verfahren nach den Ansprüchen 5 bis 8 ausführen.

**Revendications**

1. Procédé de commande d'un processus d'infusion de résine comprenant l'infusion d'un flux de résine à partir d'un réservoir de résine (1) dans une pluralité de moules (2), 2 p **caractérisé en ce que** le procédé comprend :

- classer les moules (2) en fonction de leurs volumes respectifs, et ;
- remplissage séquentiel des moules (2) avec de la résine, à partir du moule (2) ayant le volume le plus élevé ;

  dans lequel le procédé consiste à estimer le temps qu'il faut pour remplir complètement de résine chaque moule (2) de la pluralité de moules (2), et ; après avoir commencé par l'infusion de résine dans le moule (2) avec le volume le plus élevé, à commencer l'infusion de résine dans un autre moule particulier (2) lorsque le temps estimé restant pour le remplissage complet du moule (2) avec le volume le plus élevé est égal au temps estimé pour le remplissage complet de cet autre moule particulier (2) de la pluralité de moules (2) ;
  dans lequel le procédé comprend la réalisation de l'étape d'actionnement sur une pompe à pression du réservoir (1) afin d'atteindre une valeur cible de la pression, $P_o$, à l'intérieur du réservoir (1), cette valeur cible de la pression, Po, à l'intérieur du réservoir (1) permettant de maintenir un débit constant, Q, s'écoulant du réservoir (1), dans lequel la réalisation de cette étape comprend :

- établir une valeur prédéterminée, Q, pour le débit de résine s'écoulant hors du réservoir (1) et qui doit être maintenue constante ;
- calculer une valeur de pression cible, Po, dans le réservoir (1), dérivée de la valeur prédéterminée, Q ;
- mesurer la valeur réelle de la pression, y(t), à l'intérieur du réservoir (1) ;
- calculer la différence, e(t), entre la valeur de pression cible, Po, dans le réservoir (1) et la valeur de pression réelle, y(t), dans le réservoir (1) ;
- calculer une commande de contrôle PID, u(t), dérivée de la différence calculée, e(t), et ;
- entrer la commande de commande, u(t), dans un actionneur (10) agissant sur la pompe à pression (4) du réservoir (1).

2. Procédé de commande d'un processus d'infusion de résine selon la revendication 1, **caractérisé en ce que** le temps, $t_{fin\,i}$ pour le remplissage complet de chaque moule (2) « i » de la pluralité de moules (2) est estimée selon la formule suivante :

$$t_{fin\,i} = \frac{\eta}{2\,DP\,k_i\,\rho^2\,S_i^{\,2}} \left( m_i + \frac{8\,\rho\,k_i\,S_i^{\,2}}{\pi} \left( \frac{l_i}{r_i^{\,4}} + \frac{L}{R^4} \right) \right)^2$$

dans laquelle :

$\eta$ signifie la viscosité de la résine ;
p représente la densité de la résine ;
L représente la longitude d'un tuyau de distribution (31) s'étendant du réservoir de résine (1) jusqu'à chaque tuyau de ligne (32) ;
R représente le rayon du tuyau de distribution (31) ;
$l_i$ représente la longitude d'un tuyau de ligne (32) s'étendant du tuyau de distribution (31) jusqu'au moule (2) « i » ;
$r_i$ représente le rayon du tuyau de ligne (32) ;
$S_i$ représente la section équivalente du moule (2) « i » ;
$k_i$ représente la perméabilité du moule (2) « i » ;
$m_i$ représente la masse de résine à l'intérieur du moule (2) « i » lorsque ledit moule (2) « i » est complètement rempli de résine, et ;

*DP* représente la perte de charge entre le fond du réservoir de résine (1) et une pompe à vide (4) connectée à tous les moules (2) de la pluralité de moules (2).

3. Procédé de commande d'un processus d'infusion de résine selon la revendication 1, **caractérisé en ce que** la valeur de pression cible, $P_0$, dérivée de la valeur prédéterminée, Q, pour le débit de résine s'écoulant du réservoir (1), est calculée selon la formule suivante :

$$P_0 = \frac{\frac{8\eta L}{\rho\pi R^4} - \left(\frac{8\eta l_i}{\rho\pi\rho r_i^4} + \frac{\eta z_i}{\rho k_i S_i}\right) * \frac{8\eta L}{\pi R^4} * A_i}{1 - \left(\frac{8\eta l_i}{\rho\pi r_i^4} + \frac{\eta z_i}{\rho k_i S_i}\right) * \rho * A_i} * Q - \rho g h + P_{vac}$$

où :

$\eta$ signifie la viscosité de la résine ;

*p* représente la densité de la résine ;

$r_i$ représente le rayon du tuyau de ligne (32) dans la ligne de résine « i » ;

$l_i$ représente la longitude du tuyau de ligne (32) dans la ligne de résine « i » ;

*R* représente le rayon du tuyau de distribution (31) ;

*L* représente la longitude du tuyau de distribution (31) ;

$S_i$ représente la section du moule (2) dans la ligne de résine « i » ;

$k_i$ représente la perméabilité du moule (2) dans la ligne de résine « i » ;

*Zi* représente la distance à laquelle la résine a avancé à l'intérieur du moule (2) dans la ligne de résine « i » à chaque instant particulier ;

*h* représente la hauteur de la colonne de résine à partir de la surface de résine à l'intérieur du réservoir de résine (1) jusqu'au fond du réservoir de résine (1) à chaque moment particulier ;

$P_{vac}$ désigne la pression générée par la pompe à vide (4) reliée à tous les moules (2) ;

*g* représente l'accélération de la gravité ;

Q représente la valeur prédéterminée du débit de résine s'écoulant du réservoir (1) et qui doit être maintenue constante ;

$P_0$ représente la valeur cible de la pression dans le réservoir (1) ;

et *Ai* représente un coefficient de ligne de résine qui est calculé selon l'expression suivante :

$$A_i = \frac{1}{\frac{8\eta l_i}{\pi r_i^4} + \frac{\eta m_i}{\rho k_i S_i^2}}$$

où $m_i$ représente la masse ayant pénétré dans le moule (2) dans la ligne de résine « i » à chaque instant particulier ;

4. Système d'infusion de résine comprenant un réservoir de résine (1), une pluralité de moules (2), un tuyau de distribution (31) reliant le réservoir de résine (1) à une pluralité de tuyaux de ligne (32), chaque tuyau de ligne (32) reliant le tuyau de distribution (31) à un moule (2) de la pluralité de moules (2) ; une pompe à vide (4) connectée aux moules (2) ; une pompe à pression (6) connectée au réservoir de résine (1) ; une vanne principale (7) connectée à la sortie du réservoir de résine (1) pour contrôler le flux de résine vers le tuyau de distribution (31), **caractérisé en ce que** le système d'infusion de résine comprend en outre :

- une pluralité de vannes d'entrée de moule (8), chaque vanne d'entrée de moule (8) étant connectée entre chaque tuyau de ligne (32) et chaque moule (2) ;
- un contrôleur (9) connecté à chaque vanne d'entrée de moule (8) ;

dans lequel le contrôleur (9) est configuré pour mettre en oeuvre le procédé de contrôle d'un processus d'infusion de résine selon la revendication 1 ou 2 ;
dans lequel le système de perfusion de résine comprend un capteur de pression (11) à l'intérieur du réservoir de résine (1) et un module de boucle de commande PID (5), le module de boucle de commande PID (5) comprenant une unité de commande (12) et un actionneur (10), l'unité de commande (12) étant configurée pour calculer la commande de commande PID de la revendication 1 et pour entrer la commande de commande PID dans l'actionneur (10), l'actionneur (10) étant configuré pour agir sur la pompe de pression (6) du réservoir de résine (1)-

5. Méthode mise en oeuvre par ordinateur pour contrôler un processus d'infusion de résine, pour l'infusion de résine d'un réservoir de résine (1) dans une pluralité de moules en résine (2), **caractérisé en ce que** le procédé mis en oeuvre par ordinateur comprend les étapes suivantes :

- acquérir une valeur pour le volume de chaque moule (2) de la pluralité de moules en résine (2) ;
- organiser une liste de moules en résine (2) commandés en fonction des volumes acquis, dans laquelle le premier moule (2) de la liste est le moule (2) ayant le volume le plus élevé et le dernier moule (2) de la liste est le moule (2) ayant le volume le plus faible ;
- estimer le temps qu'il faut pour remplir complètement chaque moule (2) ;
- générer une pluralité d'ordres de remplissage séquencés pour le remplissage des moules en résine (2), en commençant par l'ordre de remplissage pour le moule (2) avec le volume le plus élevé, dans lequel l'ordre de remplissage pour le remplissage d'un autre moule particulier (2) est généré une fois que le temps écoulé depuis l'ordre de remplissage pour le moule (2) avec le volume le plus élevé est égal au temps estimé pour remplir complètement cet autre moule particulier (2) ;

dans lequel le procédé mis en oeuvre par ordinateur comprend la génération d'un ordre d'actionnement pour contrôler la pression, $P_o$, généré par une pompe à pression (4) connectée au réservoir de résine (1), afin de contrôler un débit de résine, Q, s'écoulant du réservoir de résine (1), dans lequel la génération de l'ordre d'actionnement pour contrôler la pression, $P_o$, comprend les étapes consistant à :

- déterminer une valeur souhaitée, Q, pour le débit de résine s'écoulant hors du réservoir (1) et qui doit être maintenue constante ;
- calculer une valeur de pression cible, $P_o$, dans le réservoir (1), dérivée de la valeur prédéterminée, Q ;
- acquérir la valeur de pression réelle, y(t), à l'intérieur du réservoir (1) ;
- calculer la différence, e(t), entre la valeur de pression cible, Po, dans le réservoir (1) et la valeur de pression réelle, y(t), dans le réservoir (1) ;
- calculer une commande de contrôle PID, u(t), dérivée de la différence calculée, e(t), et ;
- entrer la commande de commande, u(t), dans un actionneur (10) agissant sur la pompe à pression (4) du réservoir (1).

6. Procédé mis en oeuvre par ordinateur pour contrôler un processus d'infusion de résine selon la revendication 5, **caractérisé en ce que** l'estimation du temps nécessaire pour remplir complètement chaque moule (2) comprend :

- acquérir les données suivantes :

une valeur, $\eta$, pour la viscosité de la résine ;
une valeur, $p$, pour la densité de résine ;
une valeur, L, pour la longitude d'un tuyau de distribution (31) s'étendant du réservoir de résine (1) jusqu'à chaque tuyau de ligne (32) ;
une valeur, R, pour le rayon d'un tuyau de distribution (31) ;
une pluralité de valeurs, $l_j$, pour la longitude de chaque tuyau de ligne (32) s'étendant du tuyau de distribution (31) jusqu'à chaque moule (2) « i » ;
une pluralité de valeurs, $r_i$, pour le rayon de chaque tuyau de ligne (32) ;
une pluralité de valeurs, $S_i$, pour la section équivalente de chaque moule (2) « i » ;
une pluralité de valeurs, $K_{i,}$ pour la perméabilité de chaque moule (2) « i » ;
une pluralité de valeurs, $m_i$, pour la masse de résine à l'intérieur de chaque moule (2) « i » lorsque ledit moule (2) « i » est complètement rempli de résine ;
une valeur, DP, pour la perte de charge entre le fond du réservoir de résine (1) et une pompe à vide (4) reliée à tous les moules (2) de la pluralité de moules (2) ;

et

- estimer le temps, $t_{fin\,i}$ qu'il faut pour remplir complètement chaque moule (2), « i » selon la formule suivante :

$$t_{fin\,i} = \frac{\eta}{2\,DP\,k_i\,\rho^2\,S_i^2}\left(m_i + \frac{8\,\rho\,k_i\,S_i^2}{\pi}\left(\frac{l_i}{r_i^4} + \frac{L}{R^4}\right)\right)^2$$

7. Procédé mis en oeuvre par ordinateur pour contrôler un processus d'infusion de résine selon la revendication 6, **caractérisé en ce que** l'acquisition de la valeur, $DP$, pour la perte de charge entre le fond du réservoir de résine (1) et une pompe à vide (4) connectée à tous les moules (2) de la pluralité de moules (2) comprend les étapes consistant à :

- acquérir une valeur, $P_0$, pour la pression à l'intérieur du réservoir de résine (1) ;
- acquérir une valeur, $P_{vac}$, pour la pression générée par la pompe à vide (4), et ;
- calculer la valeur, $DP$, selon la formule suivante :

$$DP = P_0 + \rho g h - P_{vac}$$

où

$g$ représente l'accélération de la gravité, et ;
h représente la hauteur de la colonne de résine, de la surface de résine à l'intérieur du réservoir de résine (1) au fond du réservoir de résine (1).

8. Procédé mis en oeuvre par ordinateur pour contrôler un processus d'infusion de résine selon la revendication 5, **caractérisé en ce qu'**il comprend l'acquisition des données suivantes :

une valeur $\eta$ *pour* la viscosité de la résine ;
une valeur $p$ pour la densité de résine ;
une valeur $r_i$ pour le rayon du tuyau de ligne (32) dans la ligne de résine « i » ;
une valeur $l_i$ pour la longitude du tuyau de ligne (32) dans la ligne de résine « i » ;
une valeur R pour le rayon du tuyau de distribution (31) ;
une valeur L pour la longitude du tuyau de distribution (31) ;
une valeur $S_i$ pour la section du moule (2) dans la ligne de résine « i » ;
une valeur $k_i$ pour la perméabilité du moule (2) dans la ligne de résine « i » ;
une valeur $Z_i$ pour la distance que la résine a parcourue à l'intérieur du moule (2) dans la ligne de résine « i » à chaque instant particulier ;
une valeur h pour la hauteur de la colonne de résine de la surface de résine à l'intérieur du réservoir de résine (1) au fond du réservoir de résine (1) à chaque moment particulier ;
une valeur $P_{vac}$ pour la pression générée par la pompe à vide (4) reliée à tous les moules (2) ;
une valeur $g$ pour l'accélération par gravité ;
la valeur souhaitée Q pour le débit de résine s'écoulant du réservoir (1) et qui doit être maintenue constante ;
une valeur $m_i$ pour la masse ayant pénétré dans le moule (2) dans la ligne de résine « i » à chaque instant particulier ;
dans lequel le procédé mis en oeuvre par ordinateur comprend le calcul du coefficient de ligne de résine suivant :

$$A_i = \frac{1}{\dfrac{8\eta l_i}{\pi r_i^4} + \dfrac{\eta m_i}{\rho k_i S_i^2}}$$

et dans lequel le procédé mis en oeuvre par ordinateur comprend le calcul de la valeur de pression cible, Po, selon la formule suivante :

$$P_0 = \frac{\dfrac{8\eta L}{\rho \pi R^4} - \left(\dfrac{8\eta l_i}{\rho \pi \rho r_i{}^4} + \dfrac{\eta z_i}{\rho k_i S_i}\right) * \dfrac{8\eta L}{\pi R^4} * A_i}{1 - \left(\dfrac{8\eta l_i}{\rho \pi r_i{}^4} + \dfrac{\eta z_i}{\rho k_i S_i}\right) * \rho * A_i} * Q - \rho g h + P_{vac}$$

9. Programme d'ordinateur **caractérisé en ce qu'**il comprend des instructions qui, lorsqu'elles sont exécutées dans un ordinateur, réalisent la méthode mise en oeuvre par ordinateur de l'une des revendications 5 à 8.

10. Support lisible par ordinateur **caractérisé en ce qu'**il comprend des instructions qui, lorsqu'elles sont exécutées dans un ordinateur, réalisent la méthode mise en oeuvre par ordinateur de l'une des revendications 5 à 8.

FIG.1

FIG.2

FIG.3

EP 3 970 956 B1

FIG.4

FIG.5

EP 3 970 956 B1

EP 3 970 956 B1

FIG.6

EP 3 970 956 B1

FIG.7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1507647 B1
- US 6168408 B1
- JP 2000280276 B